# EUROPEAN PATENT SPECIFICATION

(11) **EP 3 475 776 B1**
(45) Date of publication and mention of the grant of the patent: **02.11.2022**
(21) Application number: 17816379.6
(22) Date of filing: 26.06.2017
(51) Int. Cl.: G05B 19/042, G05B 19/418

(54) **VISUAL DIAGNOSTICS / ANALYTICS SYSTEM AND METHOD FOR SMART MANUFACTURING ASSEMBLY LINE PERFORMANCE**
VISUELLES DIAGNOSE-/ANALYSESYSTEM UND VERFAHREN ZUR INTELLIGENTEN HERSTELLUNG VON MONTAGELINIENLEISTUNG
SYSTÈME ET PROCÉDÉ DE DIAGNOSTIC VISUEL/D'ANALYSE POUR LES PERFORMANCES D'UNE CHAÎNE DE MONTAGE DE FABRICATION INTELLIGENTE

(30) Priority: 24.06.2016 US 201662354239 P
(43) Date of publication of application: 01.05.2019
(73) Proprietor: Robert Bosch GmbH, 70442 Stuttgart (DE)
(72) Inventor: XU, Panpan, Mountain View, CA 94040 (US); REN, Liu, Cupertino, CA 95014 (US); MEI, Honghui, San Jose, CA 95134 (US)
(86) International application number: PCT/US2017/039330
(87) International publication number: WO 2017/223570

(56) References cited:
- WO-A1-2016/070216
- JP-A- 2001 344 006
- JP-A- 2006 268 445
- US-A1- 2011 125 461
- US-A1- 2014 336 961
- US-A1- 2016 132 595
- US-B2- 9 344 616

## Description

### CROSS-REFERENCE TO RELATED APPLIICATION

This application claims priority to a U.S. provisional patent application Ser. No. 62/354,239, filed June 24, 2016.

### FIELD

This disclosure relates generally to tracking systems and, more particularly, to a RGB-D camera based tracking system and method thereof.

### BACKGROUND

JP 2006 268445 A refers to remotely monitoring the operating status of a production line. JP 2001 344006 A refers to a manufacture controller capable of grasping the producing situations of products in each process in a manufacturing line and reflecting the result through the manufacturing processes.

### SUMMARY OF THE INVENTION

A summary of the invention herein is set forth below.

The invention relates to an interactive method for providing a visual diagnostics graph as claimed in claim 1.

### BRIEF DESCRIPTION OF THE DRAWINGS

These and other features, aspects, and advantages of this disclosure will become better understood when the following detailed description of certain exemplary embodiments is read with reference to the accompanying drawings in which like characters represent like arts throughout the drawings, wherein:
FIG. 1 is a block diagram illustrating an assembly line in a manufacturing environment;
FIG. 2 illustrates a visual diagnostics graph for a real-time tracking of assembly line performance;
FIG. 3 illustrates another visual diagnostics graph having time-aware outlier-preserving visual aggregation;
FIGs. 4A and 4B illustrate examples of visual diagnostics graph processed by quantiles brush and sample brush, respectively;
FIG. 5 illustrates a block diagram illustrating a visual diagnostics (VIDX) graph; and
FIG. 6 illustrates a block diagram illustrating a visual diagnostics (VIDX) system.

### DETAILED DESCRIPTION

The following description is presented to enable any person skilled in the art to make and use the described embodiments, and is provided in the context of a particular application and its requirements.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

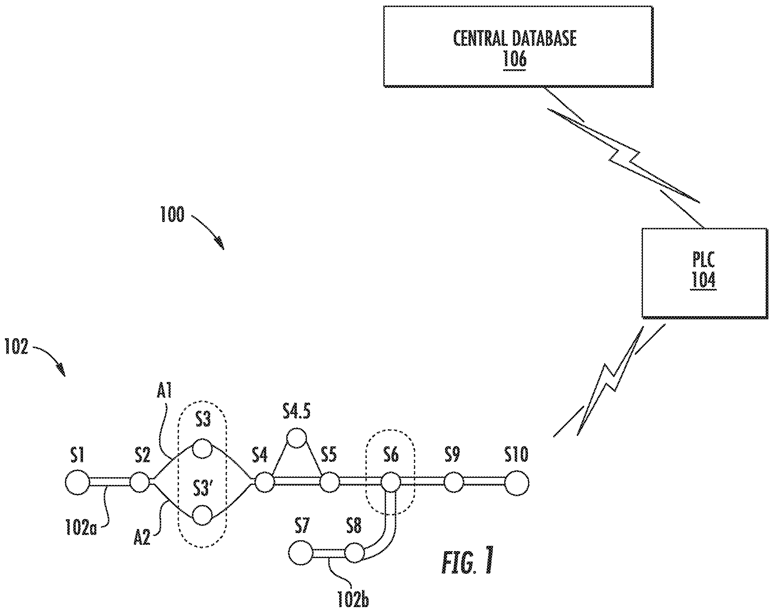

FIG. 1 is a block diagram illustrating an assembly line 102 in a manufacturing environment 100. The assembly line 102 comprises a plurality of work stations S1-S10. Parts P enter from station S1 to another stations S2-S9 to be processed and assembled to form a final product at last station S10. One or more programmable logic controllers (PLCs) 104 configured to control and monitor one or more stations S1-S10, one or more assembly lines 102, or any suitable machinery on the assembly lines 102 for manufacturing automation are provided. The PLCs 104 may be communicatively coupled the stations S1-S10, assembly lines 102, or any suitable machinery, via wireless or wired communication links, to for example a central database 106.

As can be seen, the parts P move among the stations S1-S10, S3', and S4.5 following predetermined paths of the assembly line 102. In one embodiment, at stations S1 and S7, two different types of parts P enter different subprocesses 102a, 102b, respectively. In some embodiments, at station S6 the two types of parts P from subprocesses 102a, 102b are assembled together before a final product is fully assembled. In another embodiment, at stations S3 and S3', same procedures are performed in parallel when the parts enter the stations. After existing the station S2, parts P can be routed to either station S3 following the assembly path A1 or station S3' following the assembly path A2. Either assembly path A1 or A2, the parts P undergo the same procedure. In some embodiment, depending on the type of the parts, different part types existing station S2 may be routed to respective stations S3 or S3' for further processing before, the parts P are ready for assemble at station S4. In yet another embodiment, parts P enter between stations S4 and S5 may undergoes additional procedures at station S4.5.

The PLCs 104 record an event, such as timestamps, of each part P when the part moves into each station and then send the status information of the part P to the central database 106. As the part moves along the assembly path A = (sⱼ,...,sₖ) a sequence of timestamps is created. A required time, also known as cycle time, for the part P to complete its procedures on one station and be moved onto the next as dt(p,sⱼ)-t(p, sᵢ) where time as t(p, sᵢ) is calculated. The PLCs 104 also record other event, such as fault codes, if any error has occurred when a part is being processed on a station. The timestamps and fault codes together are referred to as a trace or process data of a corresponding part. The process data of all the parts composing a finished product can be combined. Processes with comparatively longer cycle times on one or more stations or with faults, are referred to as outliers or abnormal processes.

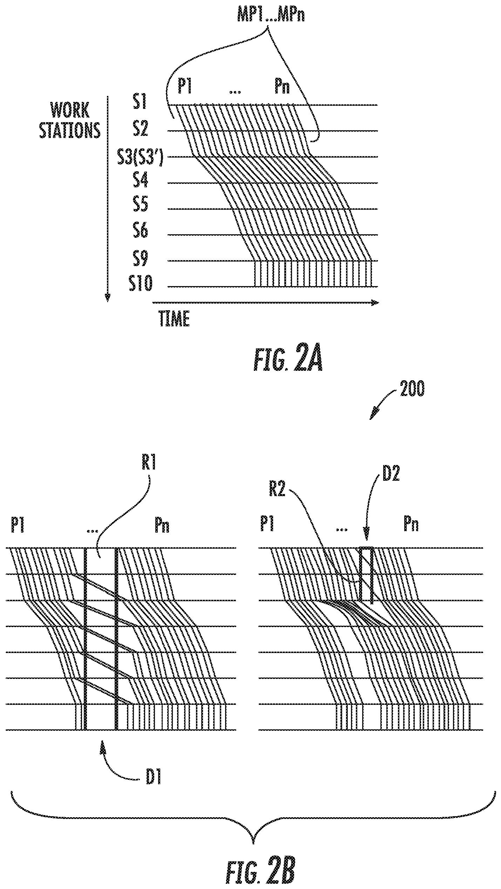

FIGs. 2A and 2B illustrate a visual diagnostics graph 200 for a real-time tracking of assembly line performance. On graph (A) of the visual diagnostics graph 200 depicts a smooth performance of the assembly line without any abnormal delay encounter on any manufacturing processes MP1-MPn when any products P1-Pn are processed on each station S1-S10 located on an assembly line 102. Now on graph (B) of the visual diagnostics graph 200, the graph depicts two distortions occurred at different time period. The assembly line is completely stopped during a time interval at D1 which may be caused by faults, prescheduled maintenance, breaks, or other unexpected factors, for example. At time interval D2, the assembly is partially stopped to handle unprocessed products, for example. For efficient process, line segments crossing each other between two time axes are parallel to each other and have equal-sized displacement. This indicates a rhythmic and smooth processing of the products on the assembly line where no delays or interruption of operations occurs, as illustrated in graph (A) of the visual diagnostics graph 200. However, the out-of-order processes with adnormal delays occurred at two time periods D1, D2 are visually depicted by line segments stretch much longer than the other equal sized displacement line segments, as illustrated in graph (B) of the visual diagnostics graph 200. For example, at time period D1, each process experiences some delays and the interruption of operations or adnormal delays are indicated by the lengths and the slopes on the line segments. When interruption of operations or adnormal delays occurred, no part is being moved from one station to another. Now at time period D2, stations S1 and S2 stop processing while waiting for S3 or S3' to finish handling the parts whose processing have been delayed. In one embodiment, occurrences of faults for the line segments for display can be coded in color. In some embodiments, the level or intensity of the faults or errors for the line segments for display can be coded in different. In other embodiment, the thickness of the line segments can varies depending on the occurrences of faults for display. In yet another embodiment, different length and angle of the line segments including the occurrences of faults may be displayed. In another embodiment, manufacturing process data including occurrences of faults may be displayed as any suitable visual human readable formats. An optional audible alert may trigger operators or managers for immediate attention of a particular assembly line. Operators or managers can quickly locate faults R1, R2 at time periods D1, D2 and identify the effect of the fault occurrences on the operation of the assembly line in real-time. The visual diagnostics graph 200 can be displayed on a thin client, a PLC, on a central device, or any suitable devices. Also, the visual diagnostics graph 200 can be forwarded and shared with more than one device.

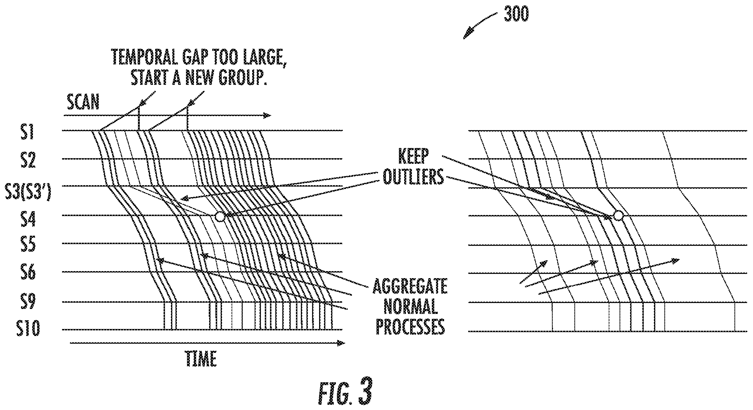

FIG. 3 illustrates another visual diagnostics graph 300 having time-aware outlier-preserving visual aggregation. The graph 300 comprises normal processes and outliers. At normal processes, the processes are aggregated based on its temporal proximity and displayed as thick bands. The outliers with faults or adnormal delays overlaid on top of the aggregated normal processes and displayed as individual polylines. In one embodiment, the aggregation of the normal processes is implemented with a set of instructions such as a greedy algorithm stored in a computer readable medium which causes a computer module to perform various functions. Other suitable algorithm can be used to perform similar functions. The computer module located locally or remotely, in some embodiments, may be a scanner, a processor, or any suitable computer modules. In one embodiment, the computer module scans the processes recorded by the PLC, determines whether to either merge the scanned processes into a current group or create a new group. If the scanned processes are temporally close to the last process in the current group, the scanned processes will be merged into the current group. Otherwise, a new group is created for the scanned processes if the difference of the starting time is greater than a predetermined threshold. To further identifying the outliers or abnormal processes based on the cycle times on the work stations, two interactive methods, e.g. quantiles brush and sample brush are provided and stored in the computer readable medium. Further details of these interactive methods will be described below.

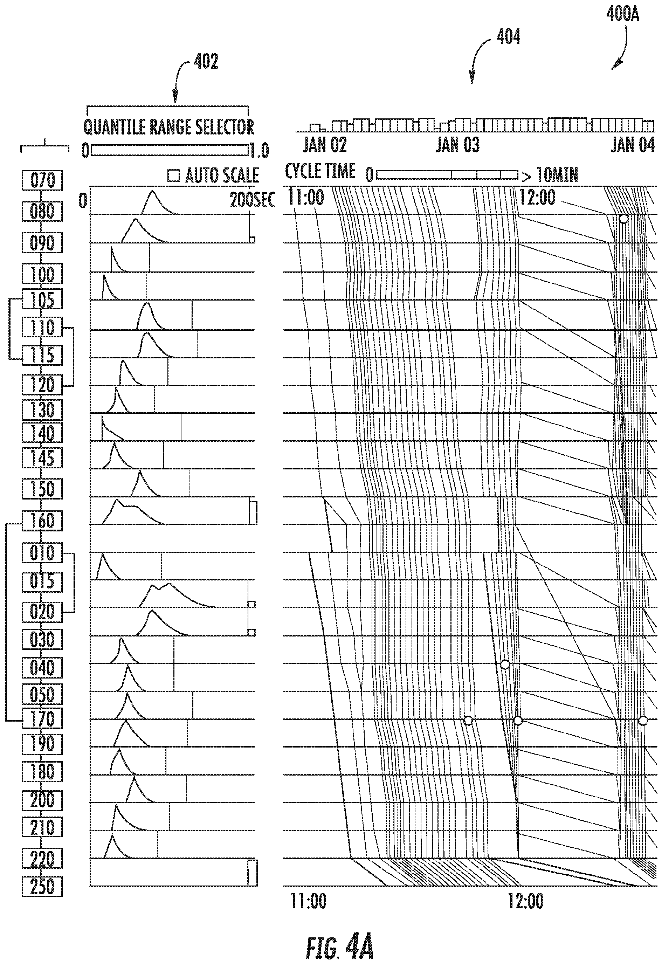

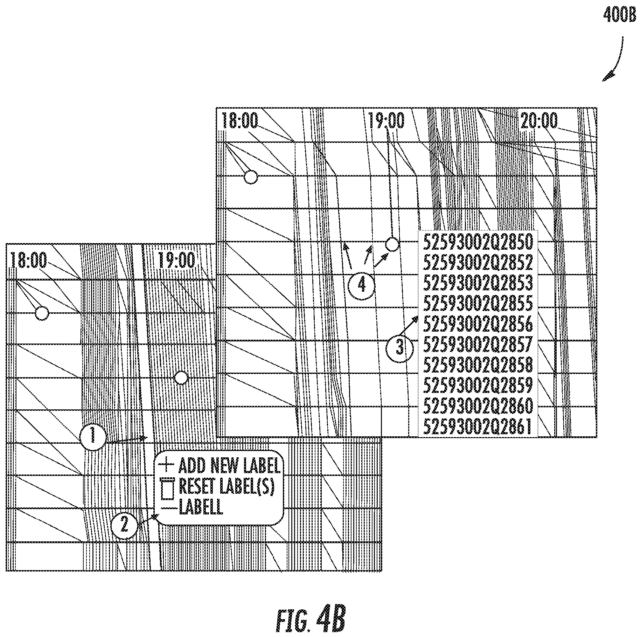

FIGs. 4A and 4B illustrate examples of visual diagnostics graph 400A, 400B processed by quantiles brush and sample brush, respectively. Quantiles brush is descriptive statistics of a variable which split a set of observations into equally sized bins. The p-quantile of a variable given a set of n samples is a value q(p), for which there are at least np samples smaller than or equal to the value q(p). According to the invention, operators or managers can specify outliers among the processes based on quantiles by either selecting a pair of values (p0,p1)(p0 < p1) from a range [0,1]. The corresponding quantiles (q(p0),q(p1)) for the cycle times on each station will then be calculated by any suitable computer module. Processes with cycle times lying outside the range of the corresponding quantiles (q(p0),q(p1)) on any stations are identified as outliers. In some embodiments, the range for individual stations may be adjusted depending on the applications. As illustrated in FIG. 4A, a quantile range selector 402 comprises distribution of the cycle times on each station. Outlier processes are display as individual polylines in an aggregated graph 404, similar to the aggregated graph 300 illustrated in FIG. 3. When a new set of outliers is detected, the aggregated graph 404 as well as the quantile range selector 402 are updated accordingly.

Now referring to FIG. 4B, an aggregated graph 406 similar to the aggregated graph 404 is illustrated. In this example, the second interactive method such as a samples brush is provided for detecting the outlier processes. A set of normal processes is labeled using a suitable graph-based learning algorithm such as label propagation algorithm stored in the computer readable medium. To detect the outliers, a neighborhood graph such as a k-nearest neighbor graph containing both the label and unlabeled data points is constructed. Then iteratively propagating the labels along the graph edges, starting from the labeled points. The iteration stops when the labels of the data points no longer change. As illustrated in FIG. 4B, at step 1, a k-nn graph of the processes based on the cycle times on the stations using a Euclidean distance metric is constructed. A threshold on the maximum neighborhood distances in the k-nn graph to stop labels from propagating to very dissimilar process is set at step 2. Next step 3, the normal label is propagated through the k-nn graph and gradually covers the dense regions in the data set containing the sample normal process. The remaining unlabeled processes are outliers which is displayed in the graph as individual polylines at step 4 and the normal process are aggregated.

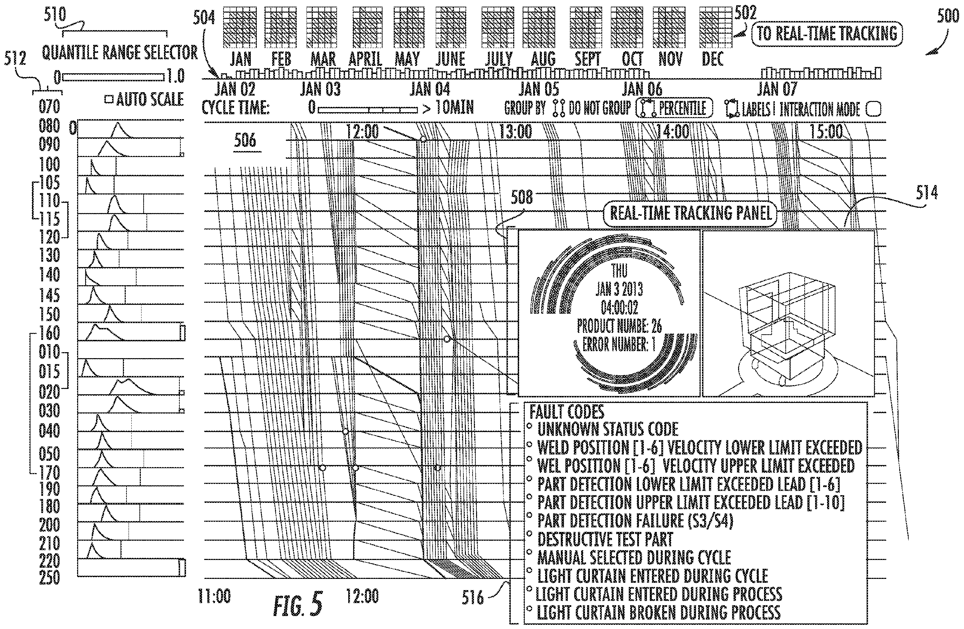

FIG. 5 illustrates a block diagram illustrating a visual diagnostics (VIDX) graph 500 comprises a calendar based visualization 502, a timeline 504 for multi-scale temporal exploration, and a visual diagnostics graph 506. Other features such as a real-time monitoring panel in a radical graph 508, multiples of histograms 510 showing the distribution of the cycle time one each station with a quantile range selector, a station map denoting the assembly line schema 512, and an explorable 3D station model visualization 514, and expandable table of color code of the faults and the frequencies of the occurrences 516 may be provided for display on any suitable devices as well as for share with any devices.

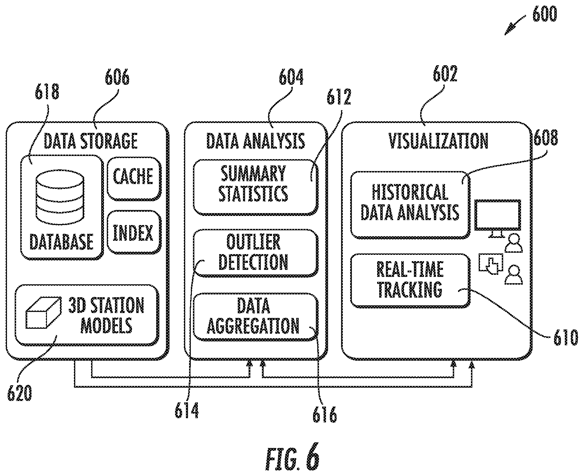

FIG. 6 illustrates a block diagram of a visual diagnostics (VIDX) system 600 comprises a visualization assembly 602, a data analytic assembly 604, and a data storage assembly or a computer readable medium 606 communicatively coupled to each other via one or more buses. Other computer assembly may be integrated into or coupled to the system 600. The visualization assembly 602 comprises a historical data analytic device 608 and a real-time tracking device 610. The data analytic assembly 604 comprises a summary statistics device 612, an outlier detection 614, and a data aggregation 616. The data storage assembly 606 comprises a database device 618 and a 3D station models 620. The database device 618 stores the manufacturing process data and then indexed the data by timestamps to support the efficient retrieval of data that falls within a time interval. The summary statistics device 612 compute a summary statistics in the visualizations in advance in the data analytic assembly 604 and cache the results in the database device 618 for faster response time. The outlier detection 614 configured to detect outlier processes and the data aggregation 616 aggregates the normal processes based on temporal proximity. In the visualization assembly 602, data is displayed from the historical data analytic device 608 whereas the real-time tracking device 610 display data fetched directly from the data storage assembly 606. Various features 502-516 of the visual diagnostics (VIDX) graph 500 illustrated in FIG. 5 is displayed for interaction.

The embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling with the scope of the appended claim.

## Claims

1. An interactive method for providing a visual diagnostics graph (400A) processed by a quantiles brush, the method comprising the steps:
receiving, from a user, a selection of a pair of values p0, p1 from a range [0,1], wherein p0 < p1;
calculating, by a computer module, corresponding quantiles (q(p0), q(p1)) for cycle times on each station of a plurality of stations (S1-S10);
identifying processes with cycle times lying outside a range of the calculated quantiles on any stations (S1-S10) as outlier processes ; and
providing a visual diagnostics graph (400A) including the identified outlier processes;
wherein the visual diagnostics graph (400A) comprises a quantile range selector (402), wherein the quantile range selector (402) comprises a distribution of the cycle times on each station;
wherein the identified outlier processes are displayed as individual polylines in an aggregated graph (404) of the visual diagnostics graph (400A); and
wherein, when a new set of outliers is detected, the aggregated graph (404) and the quantile range selector (402) are updated accordingly.

## Patentansprüche

1. Interaktives Verfahren zum Bereitstellen eines visuellen Diagnosegraphen (400A), verarbeitet durch ein Quantil-Brush, wobei das Verfahren die folgenden Schritte umfasst:
Empfangen, von einem Benutzer, einer Auswahl eines Wertepaars p0, p1 aus einem Bereich [0,1], wobei p0 < p1 gilt;
Berechnen, durch ein Computermodul, entsprechender Quantile (q(p0), q(p1)) für Zykluszeiten an jeder Station einer Mehrzahl von Stationen (S1-S10);
Identifizieren von Prozessen mit außerhalb eines Bereichs der berechneten Quantile liegenden Zykluszeiten an beliebigen Stationen (S1-S10) als Ausreißerprozesse; und
Bereitstellen eines visuellen Diagnosegraphen (400A), der die identifizierten Ausreißerprozesse enthält;
wobei der visuelle Diagnosegraph (400A) einen Quantilbereichsselektor (402) umfasst, wobei der Quantilbereichsselektor (402) eine Verteilung der Zykluszeiten an jeder Station umfasst;
wobei die identifizierten Ausreißerprozesse als individuelle Polygonzüge in einem aggregierten Graphen (404) des visuellen Diagnosegraphen (400A) angezeigt werden; und
wobei der aggregierte Graph (404) und der Quantilbereichsselektor (402) bei Detektion einer neuen Ausreißermenge entsprechend aktualisiert werden.

## Revendications

1. Procédé interactif pour fournir un graphique de diagnostic visuel (400A) traité par une brosse à quantiles, le procédé comprenant les étapes suivantes :
recevoir, d'un utilisateur, une sélection d'une paire de valeurs p0, p1 d'une plage [0,1],
où p0 < p1 ;
calculer, par un module informatique, les quantiles correspondants (q(p0), q(p1)) pour les temps de cycle sur chaque station d'une pluralité de stations (S1-S10) ;
identifier les processus dont les temps de cycle se situent à l'extérieur d'une plage des quantiles calculés sur toutes les stations (S1-S10) en tant que processus aberrants ; et
fournir un graphique de diagnostic visuel (400A) comprenant les processus aberrants identifiés, où le graphique de diagnostic visuel (400A) comprend un sélecteur de plage de quantiles (402), où le sélecteur de plage de quantiles (402) comprend une distribution des temps de cycle sur chaque station ;
où les processus aberrants identifiés sont affichés sous forme de polylignes individuelles dans un graphique agrégé (404) du graphique de diagnostic visuel (400A) ; et
où, lorsqu'un nouvel ensemble de valeurs aberrantes est détecté, le graphique agrégé (404) et le sélecteur de plage de quantiles (402) sont mis à jour en conséquence.
